# DEMANDE DE BREVET EUROPEEN

(11) **EP 1 155 952 A1**
(43) Date de publication de la demande: **21.11.2001**
(21) Numéro de dépôt: 01401219.9
(22) Date de dépôt: 14.05.2001
(51) Int. Cl.: B62M 3/08

(54) **Pédale automatique de cycle**

(30) Priorité: 18.05.2000 FR 0006487
(71) Demandeur: Peyre, Henri, 58270 St Benin d'Azy (FR)
(72) Inventeur: Peyre, Henri, 58270 St Benin d'Azy (FR)

(57) **Abrégé**

Une pédale automatique de cycle à double faces d'enclenchement, comprenant à l'intérieur d'évidements (5) d'un corps (1) de pédale des organes d'accrochage composé chacun d'un corps basculant (6), d'un système élastique (7, 8, 9), identiques à l'avant et à l'arrière de la pédale, pouvant pivoter dans deux directions, et dont les parties apparentes de préhension de la cale (17) ,portée par la chaussure, sont sous formes de champignons (16) facilement démontables pour offrir un plan de pédale conventionnel . Les champignons (16) sont équipés de rouleaux (15) qui permettent de maîtriser les frottements entre la cale (17) et le champignon. Les champignons sont réglables en hauteur.

## Description

L'invention concerne un système de pédale automatique de cycle, pour la fixation et la libération rapides d'une chaussure de cyclisme munie d'un élément d'accrochage fixé sous la semelle, appelé à coopérer avec les organes d'accrochage portés par la pédale. L'invention décrit des applications concernant des pédales montées sur des vélos tout terrain(VTT), elle peut également s'appliquer à toute pédale de route possédant une ou deux faces d'accrochage.

Il existe de nombreux systèmes de pédales automatiques. Ces pédales sont constituées d'un corps qui reçoit un axe de pédale monté sur roulements ou un axe cartouche . Quand la pédale est adaptée pour la pratique du vélo tout terrain elle possède deux faces munies d'organes d'accrochage en saillies sur les faces. L'élément d'accrochage, appelé cale, est fixé sous la semelle dans un creux en U, les bords parallèles du U étant les parties de la semelle qui servent d'appuis pour la marche et de contacts avec la face de la pédale. Les organes d'accrochage sont constitués, pour la majorité des systèmes connus :
- d'une griffe fixe, vissée sur le corps de pédale, qui reçoit la cale de la chaussure et la maintient en position dans le sens longitudinal ; cette griffe sert également de centre de pivotement pour la cale de la chaussure dans son mouvement de libération.
- d'un taquet avant fixe sous lequel s'engage la partie avant de la cale pour sa retenue en hauteur.
- d'un organe d'accrochage arrière mobile sous forme de levier en tôle retenu par un axe et maintenu élastiquement en position par un ressort de torsion, un ressort de compression, ou un bloc d'élastomère, complété d'un système de réglage du couple de dégagement.

D 'autres pédales automatiques emploient des ressorts de torsion formés en épingles dont les bouts libres servent de barres de retenue pour la cale de la chaussure.

Ces pédales automatiques donnent généralement satisfaction dans la pratique d'un cyclisme de bon niveau, mais elles demandent l'utilisation de chaussures spécifiques avec des cales , une chaussure à semelle normale n'ayant aucune stabilité sur ces pédales.

D'autre part les cales de ces pédales étant très petites, les bras de levier sont faibles donc les leviers sont sous forte tension pour atteindre les couples de retenue. Il y a de fortes pressions aux points de contact entre la cale et le levier mobile et les frottements sont importants pendant la phase de dégagement en torsion de la cale . Ces frottements augmentent considérablement avec la présence de terre et de sable sur la pédale et la cale, ce qui provoque un manque de constance du couple de libération et parfois un blocage dangereux. Pour résister aux frottements, les pièces doivent avoir une grande dureté superficielle. Pour fabriquer les pièces en emboutissage les outillages sont chers . Les réparations doivent souvent être effectuées par un spécialiste.Les pédales du marché ne permettent pas de réglage en hauteur des organes d'accrochage pour la retenue de la cale de la chaussure sur le corps de pédale. Ceci est important car les chaussures du commerce n'ont pas la même profondeur du creux en U selon la marque et le modèle. Les portées des chaussures, les appuis des pédales et les griffes s'usent Ce qui occasionne parfois un serrage au premier montage et du jeu par la suite qui nuisent au bon fonctionnement de l'ensemble et au confort.

L'invention à pour objet de palier les inconvénients cités. Elle est relative à une pédale automatique utilisée dans la pratique du vélo tout terrain quand celle-ci possède deux faces d'accrochage et à une pédale automatique utilisée dans la pratique du vélo de route quand elle ne possède qu'une seule face d'accrochage.

La griffe servant de retenue longitudinale et de centre de pivotement au cours du dégagement de la cale est supprimée. Le taquet avant et le levier mobile arrière sont remplacés par des pièces cylindriques comportant une collerette à leur sommet. Ces pièces sont visuellement assimilables à des champignons, elles serons appelées champignons aux cours de la description. La partie en relief est identique extérieurement pour les champignons des différents modes de réalisations selon l'invention. Les chapeaux des champignons à bords arrondis permettent un engagement facile de la cale de la chaussure sous la tête du premier champignon, quand à l'enclenchement de la cale commandé par le champignon mobile il est très doux grâce à la conjugaison du chapeau à bord arrondi et de la forme arrière en vé de la cale de la chaussure. Cette forme en vé permet, en ne sollicitant que très peu le système élastique du champignon mobile à l'enclenchement et en le repoussant plus loin grâce à une des pentes du vé au dégagement, d'avoir un fonctionnement doux à l'enclenchement et ferme au dégagement ce qui est un des critères de bon fonctionnement d'une pédale automatique.

Dans les solutions qui sont proposées soit les pieds des champignons, sous la tête, sont munis d'un rouleau tournant librement, soit les champignons tournent librement sur eux mêmes, soit les deux solutions sont combinées.Ce qui permet d'éliminer les frottements, d'avoir un dégagement mécanique de la cale, constant et élastique, sans point dur, pas perturbé par la présence de terre, de sable ou d'eau.

Le point de rotation de la cale au dégagement est le centre du champignon sur lequel elle prend appui ce qui accroît la longueur du bras de levier intervenant au dégagement en permettant des ressorts de force plus faible.

Les pièces de révolution constitutives des champignons sont très faciles à fabriquer sur des tours automatiques. Les frottements étant maîtrisés il n'est pas nécessaire que les pièces subissent un traitement pour leur donner une grande dureté.

Les champignons étant portés par un corps basculant en matière plastique ou en métal léger il est facile de concevoir un réglage en hauteur par interposition de rondelles.

Les corps basculants se montent sur des guides qui font partis du corps de pédale. L'ensemble formé du corps basculant, du ressort, de l'écrou et de la vis de réglage du couple se monte et se démonte très facilement du corps de pédale, comme il sera expliqué par la suite. Les corps de pédales, droit, gauche, sont identiques seul diffère le sens du taraudage qui reçoit l'axe de pédale.

Les champignons peuvent se dévisser rapidement des corps basculants pour transformer les pédales automatiques en pédales normales,cette conception est illustrée par deux modes de réalisation, un troisième mode propose des champignons escamotables de haut en bas dans le plan de la pédale.

Il y a interchangeabilité entre les corps de pédales et les corps basculants ce qui dorme la possibilité de posséder une paire de pédales et deux systèmes différents de corps basculants dont les changements s'opèrent en quelques minutes sans démonter les pédales des manivelles.

Les corps basculants peuvent pivoter vers l'avant et l'arrière dans deux modes de réalisation. Le troisième mode n'offre une possibilité de pivotement que dans une direction, mais permet par la réversibilité des corps basculants et de la cale de la chaussure de choisir un engagement de la cale sous le champignon avant ou arrière et un dégagement de la cale en rotation ayant pour centre le champignon avant ou arrière. La possibilité de ce choix est intéressante.

Les bords arrondis des chapeaux des champignons permettent aux chaussures munies d'une cale de s'extrairent du plan de la pédale sans accrochage à la phase finale sans adjonction de pentes en relief sur les plans de la pédale.
- La figure 1 représente une vue de côté en demi-coupe suivant B B de la figure 2, de la pédale selon un premier mode de réalisation de l'invention.
- La figure 2 représente une vue de dessus en demi-coupe suivant A A de la figure 1, de la pédale selon un premier mode de réalisation de l'invention..
- La figure 3 représente une vue de côté en demi-coupe suivant B B de la figure 2 de la pédale en cours d'enclenchement ou de dégagement de la cale.
- La figure 4 représente une demi-vue de dessus du corps de pédale nu selon le premier et le deuxième modes de réalisation de l'invention.
- La figure 5 représente une vue en coupe suivant C C de la figure 4.
- La figure 6 représente une vue de côté en coupe suivant D D de la figure 9, du corps basculant, en cours de montage, selon le premier mode de réalisation.
- La figure 7 représente une vue de côté du corps basculant assemblé selon le premier mode de réalisation.
- La figure 8 représente une vue de dessous du corps basculant assemblé selon le premier mode de réalisation.
- La figure 9 représente une vue de face du corps basculant assemblé selon le premier mode de réalisation.
- La figure 10 représente une vue de côté en coupe suivant E E de la figure 11 de la cale qui est fixée à la chaussure selon les trois modes de réalisation.
- La figure 11 représente une vue de dessus de la cale .
- La figure 12 représente une vue arrière de la cale .
- La figure 13 représente une vue de côté en demi-coupe G G suivant la figure 14 de la pédale selon un deuxième mode de réalisation de l'invention.
- La figure 14 représente une vue de dessus en demi-coupe F F suivant la figure 13 de la pédale selon un deuxième de réalisation de l'invention.
- La figure 15 représente une vue de côté en coupe H H suivant la figure 14 de la pédale selon un deuxième mode de réalisation de l'invention, le champignon supérieur étant effacé.
- La figure 16 représente une vue de côté en coupe H H suivant la figure 14 de la pédale selon un deuxième mode de réalisation de l'invention, le champignon supérieur étant sorti.
- La figure 17 représente une vue de côté du corps basculant selon un deuxième mode de réalisation de l'invention.
- La figure 18 représente un vue en coupe suivant J J de la figure 17 du corps basculant.
- La figure 19 représente une vue en demi-coupe suivant G G de la figure 14 de la pédale selon un deuxième mode de réalisation de l'invention, la cale de la chaussure étant en cours d'engagement, le champignon arrière escamoté.
- La figure 20 représente une vue en demi-coupe suivant K K de la figure 21 de la pédale selon un troisième mode de réalisation de l'invention.
- La figure 21 représente une vue de dessus en demi-coupe suivant L L de la figure 20 de la pédale selon un troisième de réalisation de l'invention.
- La figure 22 représente une vue en coupe suivant M M de la figure 25 du corps basculant, en cours de montage, selon un troisième mode de réalisation.
- La figure 23 représente une vue de côté du corps basculant selon un troisième mode de réalisation.
- La figure 24 représente une vue de dessous du corps basculant selon un troisième mode de réalisation.
- La figure 25 représente une vue de face du corps basculant selon un troisième mode de réalisation.
- La figure 26 représente une vue de dessus d'une plaque d'étanchéité de la pédale selon un troisième mode de réalisation.
- La figure 27 représente une vue de côté de la plaque d'étanchéité.

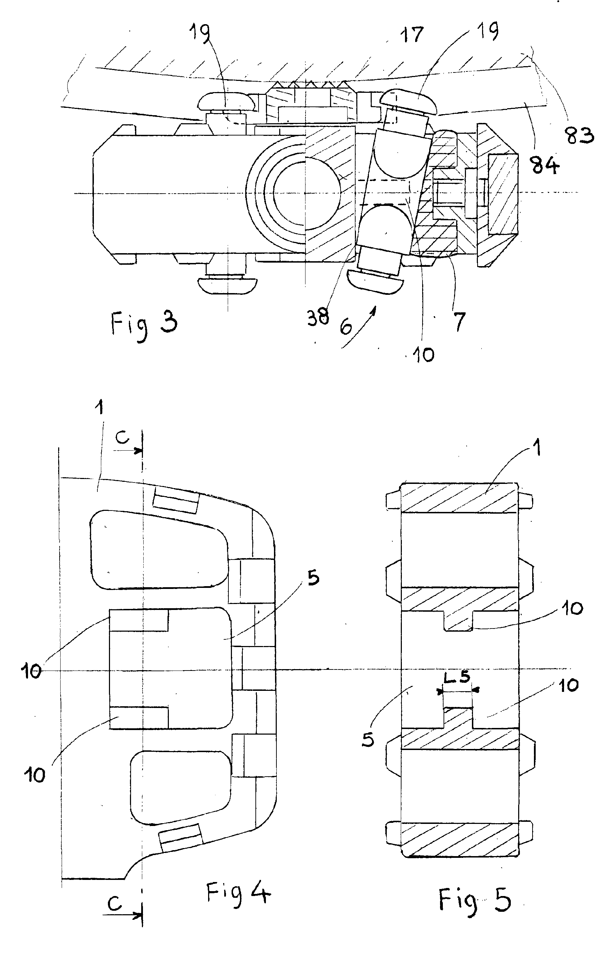

Les figures de 1 à 12 représentent un premier mode de réalisation de la pédale selon l'invention.Un corps de pédale 1, en matière plastique ou métal léger, reçoit un système d'axe de pédale 2, ce système ne concernant pas l'invention ne sera pas décrit et il n'apparaît pas sur les vues en demi- coupes. Le corps de pédale 1 possède, sur les faces, des aspérités 3 ainsi qu'une bande d'appui 4 destinées à recevoir les dessous des semelles des chaussures.Le dessous d'une semelle 83 de chaussure de vélo tout terrain possède une convexité dans le sens de la longueur, figure 3, destinée à la marche et à trouver une position précise d'appui située au milieu de la pédale comme l'est la bande 4.

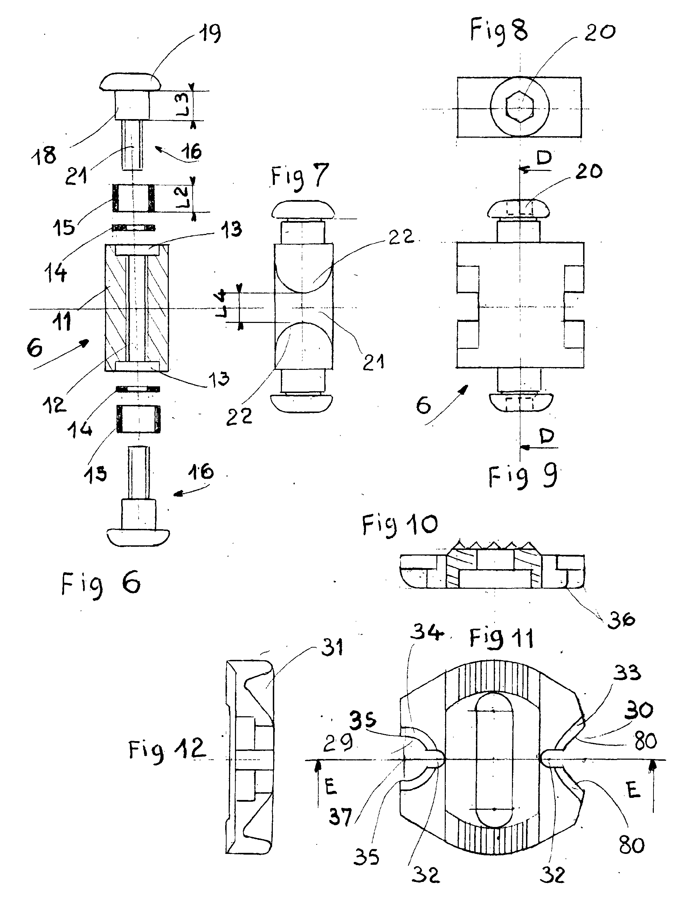

Deux évidements 5, figures 4,5, de formes rectangulaires sont aménagés de chaque côté de l'axe 2 dans l'épaisseur de la pédale. Ils sont destinés à recevoir les ensembles actifs des organes d'accrochage composés d'un corps basculant 6, d'un ressort elastomère 7, d'un écrou 8 et d'un vis 9 de réglage du couple de retenue. Les évidements 5 sont pourvus, latéralement, de chaque côté par rapport à l'axe longitudinal de la pédale, d'un guide 10 destiné au positionnement et au pivotement des corps basculants 6, figures 3, 4, 5. Le ressort élastomère 7 est du genre micro-cellulaire, insensible aux changements de températures. Ce ressort élastomère peut être remplacé en aménageant les évidements 5 par un ressort de compression . L'écrou de réglage 8 est en matière plastique ou en métal léger, il est taraudé à gauche pour conserver le sens normal de serrage de la vis 9.

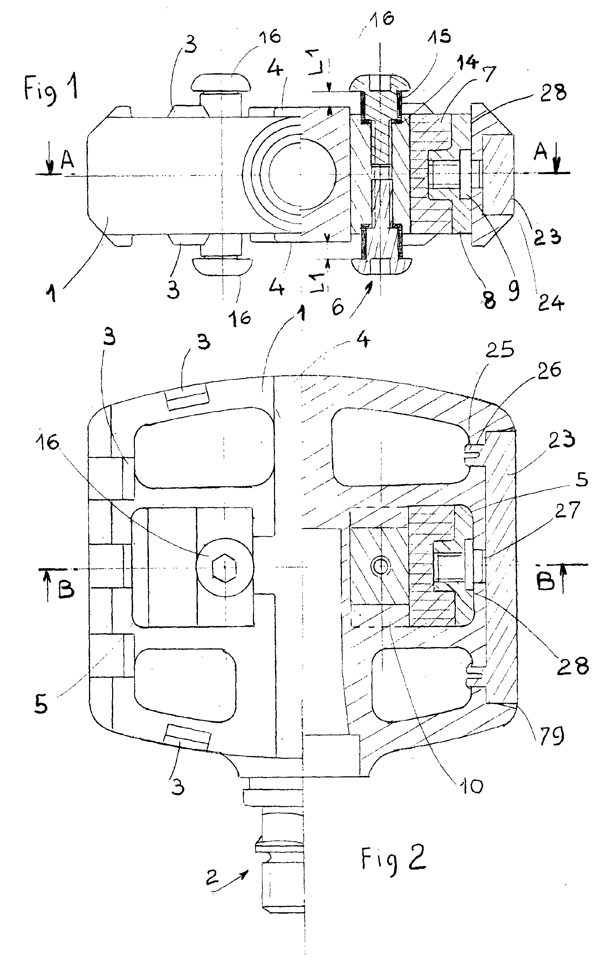

Le corps basculant 6 comprend :
- Un bloc rectangulaire 11 de préférence en matière plastique, traversé de part en part d'un trou taraudé 12 qui reçoit à chaque extrémité un lamage 13, figure 6.
- Deux rondelles 14 logées dans les lamages 13 Ces rondelles dont les épaisseurs peuvent varier servent à changer la valeur de la cote L1, figure 1. Cette cote L1, avec la profondeur du creux 84 de la semelle de chaussure dans lequel se loge la cale 17 donne le jeu existant entre la face d'appui de la pédale et la semelle quand la cale est installée sur la pédale. Ce jeu est important, il est à l'appréciation de l'utilisateur qui en demande plus ou moins. Or la profondeur du creux 84 varie avec les marques de chaussures et les modèles. Il y a également l'usure de la semelle et de la pédale qu'il faut compenser. Il existe parfois un serrage au montage de chaussures neuves. La possibilité de variations de la cote L1 résout ce probième.Un jeu de rondelles 14 d'épaisseurs différentes sera livré avec les pédales.
- Deux rouleaux en acier 15 qui sont montés, tournant librement, autour des pieds 18 des champignons 16. La cote L2 des rouleaux 15 est inférieure à la cote L3 des pieds 18, figure 6.
- Deux champignons 16, qui sont formés chacun d'un chapeau à bord arrondi 19, ce chapeau comporte en son milieu une empreinte 20 pour clé hexagonale, d'un pied 18 et d'une partie filetée 21, figures 6,8.

Le bloc rectangulaire 11 possède de chaque côté dans le sens de la largeur, en son milieu,une rainure 21 dont les flancs 22 sont en demi-cylindres, figure 7. La largeur L4 des rainures 21 est légèrement supérieure à l'épaisseur L5 des guides 10, figure 5.

Le corps de pédale 1 reçoit de chaque côté dans le sens de la longueur un catadioptre 23 encastré dans un logement 24. Ce catadioptre normalisé possède deux tétons 25 qui se clipsent dans les trous 26 du corps 1. Un trou 27 situé au milieu du logement 24 reçoit la tête de la vis 9. Il permet le montage et le démontage de l'ensemble élastique et le réglage du couple de rétention de la cale 17. Sur les figures 1, 2, 13, 14, 20, 21 les systèmes élastiques sont représentés à leur réglage le plus faible.

Pour monter un ensemble élastique dans un évidement 5 du corps de pédale 1 procéder comme suit :
- Déclipser le catadioptre 23 à l'aide d'un tournevis glissé dans les encoches 79.
- Introduire le corps basculant 6 dans le logement 5, le pousser au fond contre la paroi.
- Présenter l'ensemble formé du ressort 7, de l'écrou 8, et de la vis 9 au- dessus du logement 5 en le comprimant légèrement jusqu'à ce que l'ensemble puisse glisser entre la paroi 28 et le corps basculant.
- Pousser vers le bas, la tête de la vis 9 passe dans le trou 27 et l'ensemble élastique est clipsé sur le corps de pédale 1.
- Régler le couple de retenue de la cale 17 à l'aide de la vis 9.
- Remettre le catadioptre.

Il est envisageable de faire un trou au milieu du catadioptre pour ne pas avoir à le démonter.

Pour démonter l'ensemble élastique procéder comme suit :
- Enlever le catadioptre.
- Mettre le réglage du couple de retenue au plus faible.
- Appuyer à l'aide d'un tournevis sur la tête de la vis 9 pour la chasser du trou 27 et pousser l'ensemble élastique vers le haut ou le bas pour l'extraire du logement 5.
- Enlever le corps basculant et remettre le catadioptre .

Le démontage du corps basculant et de l'ensemble élastique s'opère pour transformer la pédale automatique en pédale normale. Il est possible de réaliser cette opération de transformation de pédale en dévissant les champignons 16 des corps basculants 6.

Les corps basculants 6 sont identiques. Le corps basculant monté à l'avant de la pédale peut également pivoter sur l'avant s'il est sollicité à l'engagement de la cale 17. Au dégagement de la cale la forme en vé 30 de la cale privilégie l'éloignement du champignon arrière.Il est à remarquer qu'il est possible de faire pivoter la cale 17 de 180° sous la semelle, de s'engager par l'arrière et de se dégager par l'avant grâce à la réversibilité de tous les composants.

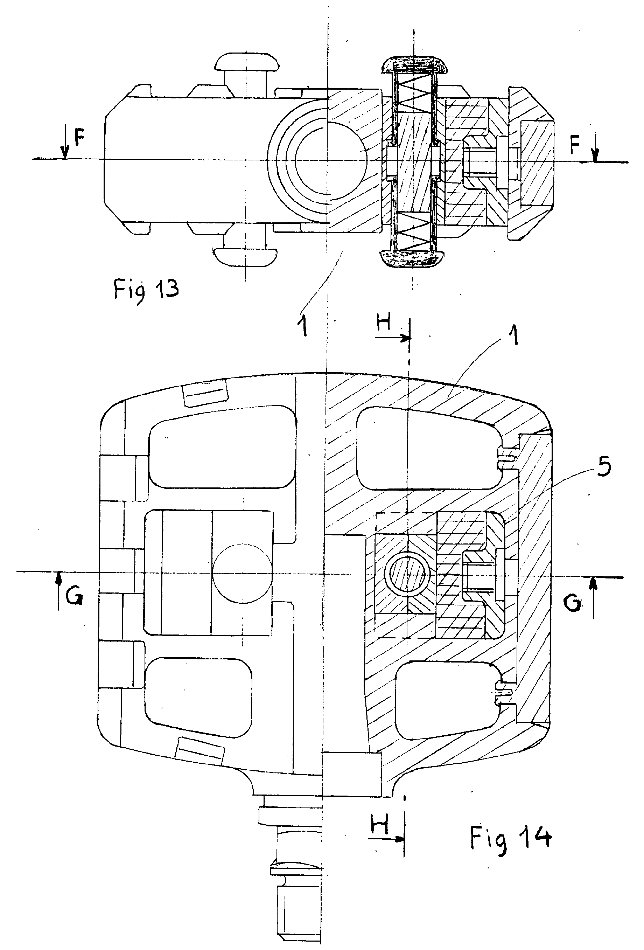

La cale 17 est en acier doux ou en laiton. Il faut juste qu'elle résiste à l'abrasion provoquée pendant la marche sur un sol gravillonneux. La cale 17, figure 11, présente un partie avant 29 semi-cylindrique dont le rayon est celui des rouleaux 15. Les bords parallèles 35 sont légèrement en avant du centre 37 de 29. Au dessus de 29 est creusée une autre partie semi cylindrique 34, qui est un dégagement en diamètre pour les chapeaux 19. Ce dégagement peut s'étendre sur toute la largeur des parties plates de chaque côté de 34.L'arrière de la cale 17 est taillé en vé dont la pointe est dirigée vers l'intérieur. Ce vé 30 est composé d'un arc de cercle, de rayon égal à celui des rouleaux 15, raccordé à deux tangentes 80 à 45° environ par rapport à l'axe longitudinal. L'étage 33 est un dégagement pour la tête du champignon arrière. Les saignées 32 sont destinées à l'évacuation de la boue. Sur l'arrière de la cale 17 deux pentes 31 aident à éjecter la cale en fin de dégagement grâce aux arrondis des chapeaux 19. La partie haute de la cale est crantée et la partie basse est creusée pour recevoir des vis comme il est connu sur les cales de vélo tout terrain.

L'enclenchement de la cale 17 sur les éléments d'accrochage s'effectue en engagent la partie avant 29 de la cale 17 sous le chapeau 19 du champignon avant, le pied doit être légèrement en biais par rapport au plan de la pédale, et en appuyant le pied contre le plan de la pédale. L'arrondi du chapeau 19 et les rayons 36 situés à l'arrière de la cale coopèrent pour faire pivoter le corps basculant 6 vers l'arrière. La partie arrière 30 s'engage sous le chapeau 19 du champignon arrière et la cale 17 se trouve prise en pince entre les champignons arrière et avant.

Pour dégager la cale 17 de l'emprise des champignons on tourne le pied à gauche ou à droite, un des pentes latérales 80 de 30 repousse le champignon arrière à l'encontre du ressort, la cale 17 tourne autour du centre 37 de l'évidement 29 . Pendant le dégagement les rouleaux 15 tournent sur les pieds 18 en neutralisant les frottements.

La figure 3 montre la cale 17 en cours d'enclenchement ou de dégagement sur la pédale. Le corps basculant 6 prend appui sur le corps 1 au point de contact 38, on voit l'importance du bras de levier résistant, ce qui a pour effet de pouvoir utiliser un ressort très faible. L'importance de l'engagement de la cale 17 par le creux avant 29 sous le chapeau 19 empêche toute libération intempestive en tirant le pied sur l'arrière de la pédale.

Les figures 10 à 19 représentent un deuxième mode de réalisation de la pédale selon l'invention, notamment en ce qui concerne le corps basculant 39.

Le corps de pédale 1, le ressort 7, l'écrou 8, la vis 9 et la cale 17 sont identiques à ceux de la première réalisation. Ainsi que le montage du corps basculant et de l'ensemble élastique sur le corps de pédale.

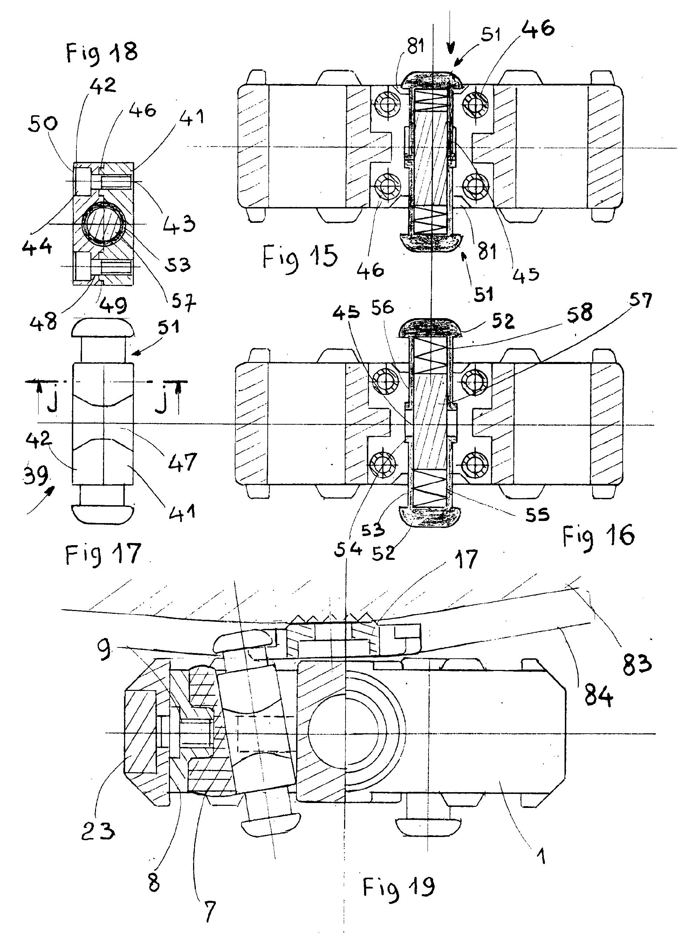

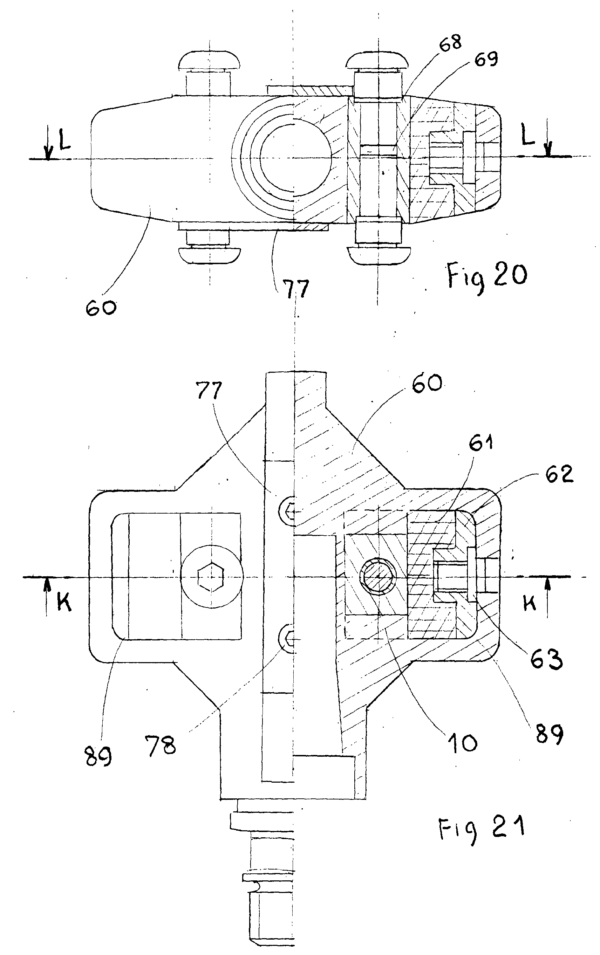

Le bloc du corps basculant 39 est en deux parties complémentaires 41, 42, de cotes extérieures identiques. Le demi-bloc 41 possède quatre pions 46 disposés à chaque angle en le regardant de face, côté intérieur, figures 15, 16, 18. Les pions 46 sont percés en leur centre de trous filetés 43, figure 18. Au milieu du demi-bloc 41 est creusé un évidemment semi-circulaire 45, prolongé de deux demi-cheminées 56, qui possèdent un demi-lamage tronconique 81, dans le sens de la hauteur. Le demi-bloc 42 est le complément de 41. Il est percé de quatre trous lisses 48 aux même entraxes que les pions 46, ces quatre trous lisses sont lamés à chaque extrémité, un lamage 49 destiné à recevoir le pion 46 de 41 et un lamage 50 destiné à loger une tête de vis 44. Les quatre vis 44, ou quatre rivets, permettent d'assembler les demi-blocs 41 et 42, figure 18.

Les champignons 51 sont formés d'un chapeau à bord arrondi 52, d'un pied 53, d'une collerette 54. Le pied est alésé d'un trou borgne 55 sur sa hauteur . Le diamètre extérieur du pied 53 est celui du diamètre extérieur du rouleau 15 de la première réalisation. Les champignons 51 sont montés en opposition comme le montre la figure 16. Un cylindre calibré 57 en matière plastique, servant au maintient et au guidage des champignons 51est monté coulissant dans les alésages 55.Un ressort 58 est installé entre chaque extrémité du cylindre 57 et le fond des alésages 55. Ces deux ressorts sont destinés à maintenir les deux champignons en position haute , comme le montre la figure 16, et à permettre aux champignons sollicités de s'effacer, figure 15.

Pour assembler les corps basculants 39, il faut en premier placer un ressort 58 au fond de chaque alésage 55, puis mettre en prise le cylindre 57 dans les alésages 55 en comprimant les deux champignons et assembler les deux demi-blocs 41, 42 à l'aide des vis 44 en prenant les deux champignons dans les logements 45, 56, serrer les vis 44. Les corps basculants 39 étant interchangeables et réversibles les mettre indifféremment dans les évidements 5 du corps de pédale 1. Il est à remarquer que les champignons 51 peuvent s'effacer jusqu'à affleurer les faces de la pédale, figure 15, qu'ils sont libres en rotation et que les flancs de l'encoche 47 du corps basculant 39 ne sont pas complètement demi-cylindriques , ce qui n'a pas d'incidence sur le fonctionnement, pour pouvoir loger les pions 46.

Quant on met le pied sur la pédale avec une semelle plate classique, les champignons s'effacent , et la pédale présente la stabilité d'une pédale conventionnelle pour la chaussure.

Pour engager la cale 17 entre les champignons 51 il faut procéder de la façon suivante :
- poser le pied sur la pédale, un peu en arrière, pour enfoncer le champignon arrière avec la cale 17 sans toucher au champignon avant.
- faire glisser le pied sur l'avant pour engager la cale 17 par sa partie avant 29 sous le chapeau 52 du champignon avant.
- continuer à pousser le pied fortement sur l'avant, le champignon avant sollicité bascule comme il est montré à la figure 19, la cale 17 glisse sur le chapeau du champignon arrière et celui-ci libéré peut remonter, la cale 17 est repoussée vers l'arrière par le système élastique avant et le creux 30 de la cale 17 s'engage sous le chapeau du champignon arrière. La cale 17 est ainsi prise en pince entre les champignons avant et arrière.

Pour dégager la cale procéder comme il est expliqué dans la description de la première réalisation. Les comportements du corps basculant et du système élastique sont identiques, figure 3.

Les figures 10 à 12 et 20 à 27 illustrent un troisième mode de réalisation de la pédale selon l'invention.

Le corps de pédale 60 est réduit Les catadioptres sont supprimés. Les ressorts élastomère 61, les écrous 62 et les vis 63 sont identiques dans leur fonctionnement à ceux décrits dans les deux premiers modes de réalisation.

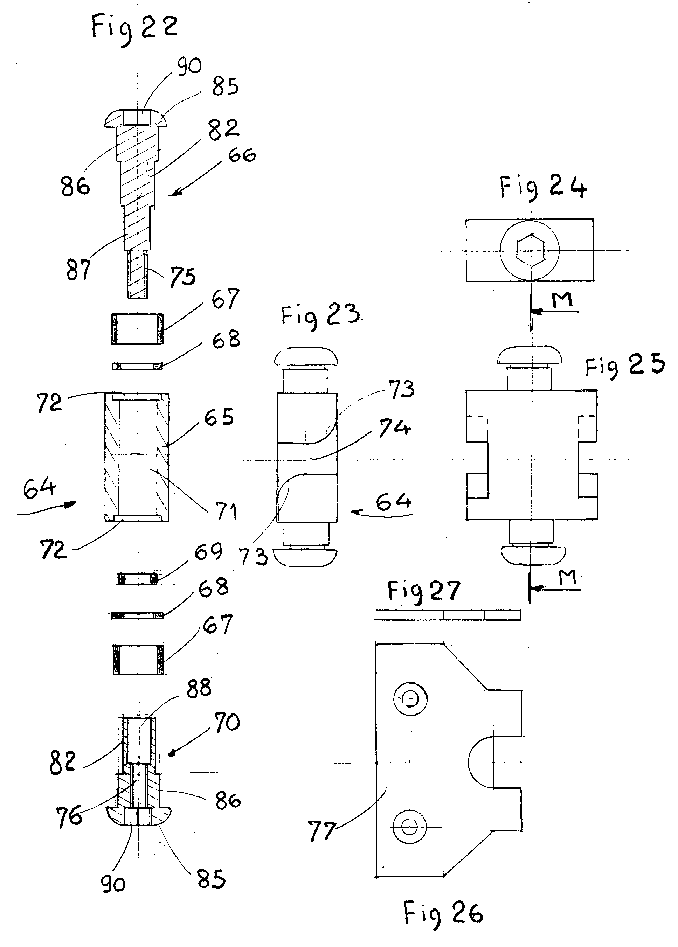

Le corps basculant 64 de ce troisième mode de réalisation est composé :
- d'un bloc 65, en matière plastique de préférence, percé d'un trou lisse 71, de part en part dans le sens de la hauteur, pourvu d'un lamage 72 à chaque extrémité. La rainure 74, de largeur identique à celle de la rainure 21 ne possède que deux quart de rayon 73 de basculement, symétriques selon une ligne à 45°, comme le montre la figure 23.Ce qui a pour effet de ne permettre le pivotement des corps basculants que dans un seul sens.
- d'un champignon mâle 66 qui comprend un chapeau 85, un pied 86, deux étages 82, 87, une partie filetée 75 et une empreinte pour clef 90.
- d'un champignon femelle 70 qui comprend un chapeau 85, un pied 86,un étage 82, un alésage 88 , un taraudage 76, et une empreinte pour clef 90.
- de deux rondelles de réglage hauteur 68.
- de deux rouleaux 67 qui se montent sur les pieds 86.
- de deux rondelles de réglage hauteur 68.
- d'une rondelle de compensation 69.

Les champignons 66 et 70 ,munis des rouleaux 67, des rondelles de réglage hauteur 68 et de la rondelle de compensation 69 sont assemblés à l'intérieur du bloc 64. Le champignon 66 se visse sur le champignon 70, les cotes des étages des champignons et des rondelles font que une fois assemblés fortement les champignons peuvent tourner sur eux même à l'intérieur des alésages 71. La rondelle de compensation 69 a une épaisseur qui est le double de celle d'une rondelle 68. Quand on change les rondelles 68 il faut également changer la rondelle 69 pour que les champignons 66 et 70 se rapproche ou s'éloignent également des faces de la pédale et qu'un même jeu subsiste pour que les champignons tournent librement dans les alésages 71. La rondelle 69 a le même diamètre que l'étage 82 du champignon 66 et elle se trouve coincée entre les deux champignons.

Dans ce cas de figure on obtient la sécurité d'une double rotation au dégagement de la cale, les champignons tournent à l'intérieur du bloc 65 et les rouleaux 67 sur les pieds 86.

Comme il a été expliqué précédemment les corps basculants 64 qui ne possèdent que deux quarts de rayons opposés symétriquement ne peuvent basculer que dans une seule direction. Ce qui permet de choisir, en plaçant au montage, les corps basculants dans les évidements 89 du corps 60 de la pédale, un sens d'engagement pour la cale 17 soit par l'arrière soit par l'avant. Par l'arrière c'est le champignon avant qui est mobile et on introduit la cale 17 en premier sous le champignon arrière, au dégagement la cale tourne sur le champignon arrière et c'est le champignon avant qui s'écarte pour la libération. Par l'avant c'est le principe classique, le champignon avant est fixe et le champignon arrière mobile. Si c'est l'engagement par l'arrière qui est choisi, il faut penser à faire pivoter la cale de 180° et la plaque d'étanchéité . Des utilisateurs sont intéressés par un engagement par l'arrière, la conception particulières des pédales selon l'invention autorise cette possibilité.

Comme dans les deux premiers modes de réalisation, les champignons sont facilement démontables pour que la pédale présente des faces utilisables avec des chaussures normales.

Une plaque 77,figure 26, 27 est vissée sur chaque face de la pédale, elle recouvre en partie le corps basculant qui est choisi pour bouger, elle est maintenue par deux vis 78, et assure l'étanchéité en cas de boue très liquide.

Dans ce mode de réalisation les corps basculants 64 ne pivotant que dans une seule direction ils peuvent être maintenus élastiquement par des ressorts de torsion ou des lames ressort.

Dans les trois modes de réalisation décrits les corps basculants 6, 39, 64 sont positionnés et articulés sur les corps de pédales 1, 60 par des rainures latérales 21, 47, 74 qui coopèrent avec des guides 10 portés par les corps de pédales 1, 60.

Les trois modes de réalisation décrits sont intéressants industriellement par :
- la simplicité des pièces de tour, sans conception d'outillages.
- l'unicité des pièces.
- le moule du corps de pédale a une empreinte .
- les réparations éventuelles peuvent être effectuées par un particulier.
- proposition intéressante de possibilité d'acheter une paire de pédale et plusieurs systèmes d'accrochage.

## Revendications

1. Pédale automatique de cycle du type comportant un corps de pédale (1), muni d'organes d'accrochage (6) servant à l'enclenchement, à la retenue et à la libération d'un élément d'accrochage (17) porté par la chaussure (83), organes d'accrochage maintenus en position précontrainte par des systèmes élastiques réglables (7,8,9) **caractérisée en ce que** les organes d'accrochage sont identiques à l'avant et à l'arrière de la pédale, que leurs parties actives (16) se présentent sous forme de cylindres surmontés d'un chapeau à bord arrondi, dont la forme est celle d'un champignon (16) qui a au moins une partie constitutive libre en rotation.

2. Pédale automatique de cycle selon la revendication 1 **caractérisée en ce que** les champignons (16,51,66) sont montés sur des corps basculants (6,39,64) soit vissés (16), soit libres en rotation (51,66,70), les corps basculants étant positionnés et articulés sur les corps de pédales (1,60) par des rainures latérales (21,47,74) qui coopèrent avec des guides (10) portés par les corps de pédales.

3. Pédale automatique de cycle selon les revendications 1 et 2 **caractérisée en ce que** les champignons (16, 66, 70) sont facilement démontables à l'aide d'une clef et sont réglables en hauteur par rapport au plan de la pédale.

4. Pédale automatique de cycle selon les revendications 1et 2 **caractérisé en ce que** les corps de pédales (1,60) possèdent des évidements fermés (5, 89) munis de guides (10) servant au maintient et au pivotement des corps basculants (6, 39, 64).

5. Pédale automatique de cycle selon les revendications 1 et 2 **caractérisée en ce que** les champignons (51) sont escamotables dans le plan de la pédale.

6. Pédale automatique de cycle selon la revendication 5 **caractérisée en ce que** les champignons escamotables (51) sont maintenus en position par des ressorts intérieurs (58) aux champignons.

7. Pédale automatique de cycle selon les revendications 1, 5 et 6 **caractérisée en ce que** l'opération d'engagement de la cale (17), fixée à la chaussure, sur les champignons (51) s'opère en écrasant le champignon arrière et en repoussant le champignon avant.

8. Pédale automatique de cycle selon l'une quelconque des revendications précédentes **caractérisée en ce que** la cale (17) fixée à la chaussure présente une configuration semi- cylindrique (29), qui a le même rayon que celui des parties tournantes des champignons (15, 53, 67), à une extrémité et une configuration en vé ( 30) dont la pointe est dirigée vers l'intérieur de la cale et dont l'angle formé par les branches (80) du vé est d'environ 90° et qui offre la possibilité d'avoir deux sens de montage longitudinal.

9. Pédale automatique de cycle selon les revendications 1, 2 et 4 **caractérisée en ce que** le réglage du couple de rétention de la cale (17), le montage et le démontage de chaque ensemble élastique est assuré par le truchement de la tête d'une vis (9) de réglage du couple et d'un trou (27) situé au milieu de chaque logement (24) du catadioptre du corps de pédale (1).

10. Pédale automatique de cycle les revendications 8 et 9 **caractérisée en ce que** le corps basculant (64) n'a la possibilité de pivoter que dans une seule direction et permet de choisir le sens d'engagement de la cale (17) soit sous le champignon avant ou soit sous le champignon arrière en accord avec le sens de montage de la cale sur la chaussure.
